# EUROPÄISCHE PATENTSCHRIFT

(11) **EP 0 771 451 B1**
(45) Veröffentlichungstag und Bekanntmachung des Hinweises auf die Patenterteilung: **23.09.1998**
(21) Anmeldenummer: 95923167.1
(22) Anmeldetag: 11.07.1995
(51) Int. Cl.: G07F 7/00, A47F 10/02

(54) **VERFAHREN UND VORRICHTUNG ZUM AUTOMATISCHEN WARENABRUF IN VERKAUFSLOKALEN**
AUTOMATIC GOODS ORDERING PROCESS AND DEVICE FOR SALE FACILITIES
PROCEDE ET DISPOSITIF DE COMMANDE AUTOMATIQUE DE MARCHANDISES DANS DES LOCAUX DE VENTE

(30) Priorität: 14.07.1994 CH 2250/94
(43) Veröffentlichungstag der Anmeldung: 07.05.1997
(73) Patentinhaber: Rosenberg, Andreas, 8153 Rümlang (CH)
(72) Erfinder: Rosenberg, Andreas, 8153 Rümlang (CH)
(74) Vertreter: Patentanwaltsbüro Feldmann AG
(86) Internationale Anmeldenummer: CH9500160
(87) Internationale Veröffentlichungsnummer: WO9602900

(56) Entgegenhaltungen:
- EP-A- 0 570 913
- DE-A- 4 134 872
- FR-A- 2 563 985
- FR-A- 2 592 188
- FR-A- 2 693 643
- FR-A- 2 694 487
- GB-A- 2 143 661
- US-A- 3 541 309
- US-A- 5 186 281
- IBM TECHNICAL DISCLOSURE BULLETIN, Bd. 37, Nr. 3, NEW YORK, US, Seiten 269-270, ANONYMOUS 'Computer-Automated Shopping' in der Anmeldung erwähnt
- IBM TECHNICAL DISCLOSURE BULLETIN, Bd. 17, Nr. 9, NEW YORK, US, Seite 2605 ANONYMOUS 'Automated Retailing System. February 1975.' in der Anmeldung erwähnt

## Beschreibung

Die vorliegende Erfindung betrifft ein Verfahren zum automatischen Warenabruf in Verkaufs lokalen gemäss Oberbegriff des Patentanspruches 1. Sie betrifft weiter ein Einkaufszentrum zur Durchführung des Verfahrens gemäss Oberbegriff des Patentanspruches 4 (s. FR-A-2,694,487)

Seit der Einführung der Selbstbedienungseinkaufsszentren hat sich das Einkaufssystem kaum geändert. Am Eingang des Verkaufslokales werden Einkaufswagen bereitgestellt, die dann vom Kunden durch das Lokal geschoben werden, wobei dieser die gewünschten Waren aus den Regalen nimmt und in seinen Einkaufswagen legt. Dieses System birgt mehrere Nachteile:

Für die Inhaber und Betreiber derartiger Einkaufsgeschäfte:
- Die Abstände zwischen den Regalen müssen genügend breit sein, damit sich zwei Einkaufswagen kreuzen können. Zudem muss eine genügend grosse Stückzahl jeder feilgehaltenen Ware in den Regalen bereitstehen. Dadurch benötigen derartige Verkaufslokale viel Raum, was bei den hohen Quadratmeter-Mietpreisen einen beträchlichen Kostenpunkt ausmacht.
- Die Regale müssen regelmässig mit Waren aus dem Lager aufgefüllt werden. Bei hoher Frequentierung des Geschäftes muss dies sogar während den Oeffnungszeiten erfolgen. Dies führt jedoch zu Behinderungen der Kunden, da Teile der Regale nicht zugänglich sind. Zudem versperren sich die Rollboxen aus dem Lager und die Einkaufswagen gegenseitig den Weg.
- Die Regale müssen regelmässig kontrolliert werden, um Waren mit abgelaufenen Verfalldaten auszusortieren.
- Da die Waren frei zugänglich sind, wird Diebstahl und Vandalismus vereinfacht. Derartige Geschäfte weisen auch eine entsprechend hohe Verlustquote auf.

Für die Kunden:
- In Hauptverkaufszeiten ist das Einkaufen erschwert und nervenaufreibend, da die vielen Einkaufswagen ein rasches Fortbewegen verhindern. Zudem entstehen lange Warteschlangen an den Kassen.

Weitere bekannte Einkaufssysteme, wie der Katalogversand, weisen zwar diese Nachteile nicht auf, vermitteln jedoch auch kein Einkaufserlebnis. Die Waren können nicht vorgängig begutachtet werden, zudem müssen Bestellscheine mit komplizierten Nummerncodes ausgefüllt werden.

Ferner sind Einkaufssysteme bekannt, die eine gewisse Automatisierung aufweisen. Der Kunde muss im Geschäft die Waren nicht mehr selber in einen Einkaufswagen legen, sondern er bestellt anhand von Mustern über Eingabeeinheiten die gewünschten Waren, die dann in einem mit den Eingabeeinheiten verbundenen Lager zusammengestellt werden.
So ist aus IBM Technical Disclosure Bulletin Bd. 37, Nr. 3 und Bd. 17, Nr. 9 ein System bekannt, das einen Verkaufsraum umfasst, in dem mehrere Stationen eingerichtet sind. An diesen Stationen kann der Kunde mittels einer kundenspezifischen Magnetkarte seine Bestellung aufgeben. Die Waren, die er bestellen will, wählt er anhand von auf Bildschirmen dargestellten Abbildungen aus.

Auch in dem in FR-A-2'592'188 beschriebenen Einkaufssystem sind die feilgehaltenen Waren auf Bildschirmen ersichtlich.

Diese Einkaufssysteme haben den Nachteil, dass die Kunden die feilgehaltenen Waren nicht prüfen können, sondern sie ähnlich dem bekannten Katalogsystem anhand von Abbildungen auswählen müssen und dass nur die ausgewählten Stücke probeweise erhalten werden.

In den in FR-A-2'693'643 und FR-A-2'694'487 offenbarten Systemen sind deshalb Musterbeispiele der Waren ausgestellt. Diese befinden sich jedoch hinter einer Glasvitrine. Es sind Eingabeeinheiten vorhanden, mittels denen die entsprechende Ware bestellt werden kann. Auch hier kann die Ware jedoch nicht in die Hand genommen und beispielsweise die auf verschiedenen Seiten den Verpackungen aufgedruckten Warenbeschreibungen oder Inhaltsangaben gelesen werden. Dieses System bringt deshalb keine Verbesserung im Vergleich zu den bekannten Katalogsystemen.

Ferner sind Systeme bekannt, in denen der Kunde Warenbeispiele zur Prüfung in die Hand nehmen kann. So ist aus EP-A-0'570'913 ein Einkaufssystem bekannt, in dem der Kunde durch einen Musterladen schlendern kann und über ein Gerät, das er in der Hand hält, seine Bestellungen aufgeben kann.

DE-A-4'134'872 beschreibt ein Einkaufssystem, bei dem Muster der einzelnen Waren in Gruppen auf Warentischen angeordnet sind. Zu jedem Warentisch gehört ein Eingabegerät mit Bildschirm, über das die entsprechenden Waren aus dem Lager bestellt werden können.
Die Nachteil dieser Systeme ist, dass viele Kunden sich nicht zutrauen, derartige Geräte zu bedienen und deshalb das altbekannte Einkaufssystem vorziehen.

GB-A-2,143,661 beschreibt eine Vorrichtung bzw. ein Verfahren zum automatischen Waren abruf mit einer Förderanlage mit Warenkörben.

Es ist deshalb Aufgabe der Erfindung, ein Verfahren zum Verkauf von Waren zu schaffen, welches ein Einkaufen in Verkaufslokalen ermöglicht, jedoch obengenannte Nachteile behebt.

Diese Aufgabe löst ein Verfahren mit den Merkmalen des Patentanspruches 1.

Es ist eine weitere Aufgabe der Erfindung, ein Einkaufszentrum zu schaffen, das die Durchführung des in Patentanspruch 1 beanspruchten Verfahrens ermöglicht.

Diese Aufgabe löst ein Selbstbedienungs-Einkaufszentrum mit den Merkmalen des Patentanspruches 4.

Das erfindungsgemässe Verfahren und das erfindungsgemässe Einkaufszentrum weisen den Vorteil auf, dass die effektiv zum Verkauf vorgesehenen Waren nicht mehr für den Kunden direkt zugänglich sind, dieser aber trotzdem ein Anschauungsexemplar jeder Ware in die Hand nehmen und prüfen kann.
Die Waren werden in einem Lager aufbewahrt, das mit dem Verkaufsraum mittels Datenleitungen verbunden ist. Das vom Geschäft angewendete Verfahren zum Verkauf der Waren ist für den Kunden einfach erfassbar und erfordert keine speziellen Kenntnisse. Der Kunde begeht wie in den bekannten Einkaufsläden die Verkaufsfläche und wählt seine Podukte aus. Doch anstatt dass er diese nun aus dem Regal nimmt und in seinen Einkaufskorb legt, aktiviert er einen kundenspezifischen Warenabruf. Der Abruf erfolgt dadurch, dass eine Kundenidentifikationskarte in einen Karteneinschub einer Warenabrufeinheit geschoben wird. Da jedes Anschauungsexemplar eindeutig einer derartigen Warenabrufeinheit zugeordnet werden kann und keine weitere Aktion oder Tastenbetätigung erforderlich ist, ist der Warenabruf stark vereinfacht und erfordert keine technischen Kenntnisse. Dadurch wird die Hemmschwelle zur Benützung derartiger Einkaufssysteme stark herabgesetzt. Jeder Abruf wird somit eindeutig und gleichzeitig einer einzigen wohldefinierten Ware und dem betreffenden Kunden zugeordnet. Sollen mehrere Exemplare derselben Ware bestellt werden, so kann die gewünschte Anzahl mit einem einzigen Abruf gekoppelt werden. Die Bestellung der Waren wird in das Lager weitergeleitet, wo die bestellten Waren kundenspezifisch zusammengestellt werden. Dass die Waren nicht mehr im Geschäft ausgestellt, sondern in einem Lager aufbewahrt werden, birgt mehrere zusätzliche Vorteile. Die Lagerverwaltung und -bewirtschaftung ist beispielsweise vereinfacht, da nicht noch die zusätzlichen, bereits ausgestellten Waren mitberücksichtigt werden müssen. Waren mit abgelaufenem Verfallsdatum können einfach aus dem Lager entfernt werden und müssen nicht aus der Menge noch verkaufbarer Waren ausselektioniert werden. Zudem können die Waren bei optimalen Klimabedingungen gelagert werden. Dies ist im Bereich der Verkaufsflächen nicht gewährleistet, da die Temperatur- und Luftfeuchtigkeitsverhältnisse im Raum schwanken, je nach dem wieviele Kunden sich darin aufhalten. Das erfindungsgemässe Verfahren und das entsprechende Einkaufszentrum eignen sich insbesondere für Haushaltartikel- und Lebensmittelgeschäfte, Gemischtwarenhandlungen, Spielwarenhandlungen und Elektronikgeschäfte.

In den beiliegenden Zeichnungen ist ein Ausführungsbeispiel des Erfindungsgegenstandes dargestellt. Anhand dieser Zeichnungen wird das erfindungsgemässe Verfahren und das erfindungsgemässe Einkaufszentrum zur Durchführung des Verfahrens nachfolgend beschrieben. Es zeigen
- Figur 1: eine Ansicht eines Verkaufsregales innerhalb des effektiven Verkaufslokales gemäss der Erfindung;
- Figur 2: eine Detailansicht des Verkaufsregales mit der Warenabrufeinheit;
- Figur 3: eine Ansicht einer Kundenidentifikations-Karte;
- Figur 4: eine Ansicht einer zentralen Informationssäule;
- Figur 5: eine Ansicht eines Lagerabschnittes;
- Figur 6: eine Aufsicht einer Förderanlage zwischen Lager und Ausgabestelle und
- Figuren 7a und b: eine Ansicht einer weiteren Ausführungsform des Verkaufsregals mit Warenabrufeinheiten.

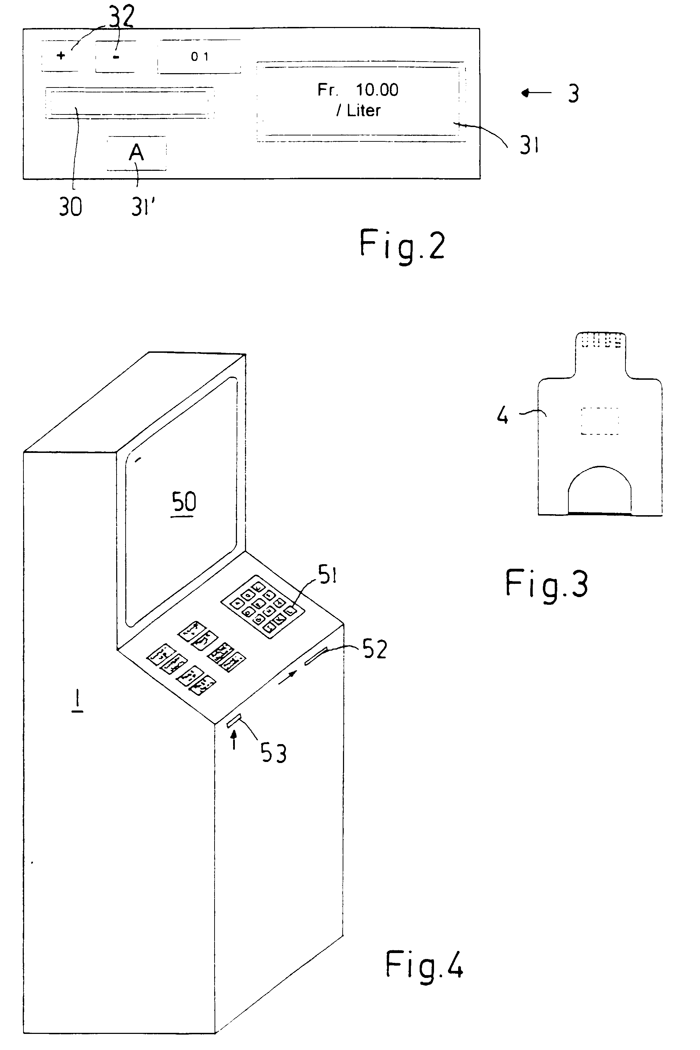

Das erfindungsgemässe Verfahren wird durch den Kunden aktiviert und durch den Betreiber des Einkaufszentrums durchgeführt. Deshalb wird es im folgenden aus der Sicht des Kunden beschrieben.
Der Kunde betritt das Einkaufszentrum und anstatt dass er einen Einkaufswagen sucht, entnimmt er einer hier nicht dargestellten Kartensäule eine Kundenidentifikationskarte 4. Eine Ausführungsform einer derartigen Kundenidentifikationskarte 4 ist in der Figur 3 dargestellt. Diese Karte besteht bevorzugterweise aus hartem Kunststoff und weist somit eine hohe Festigkeit auf, damit sie nicht leicht zerstörbar ist und somit eine lange Lebensdauer aufweist. Jede Karte besitzt einen eindeutig identifizierbaren Codeauf. Sie beinhaltet deshalb beispielsweise einen Mikrochip, der als fester Bestandteil in die Karte eingebaut ist und in dem eine spezifische Kartennummer abgespeichert ist. Da keine weiteren Daten auf diese Karte gespeichert werden müssen, kann er kostengünstig hergestellt werden.

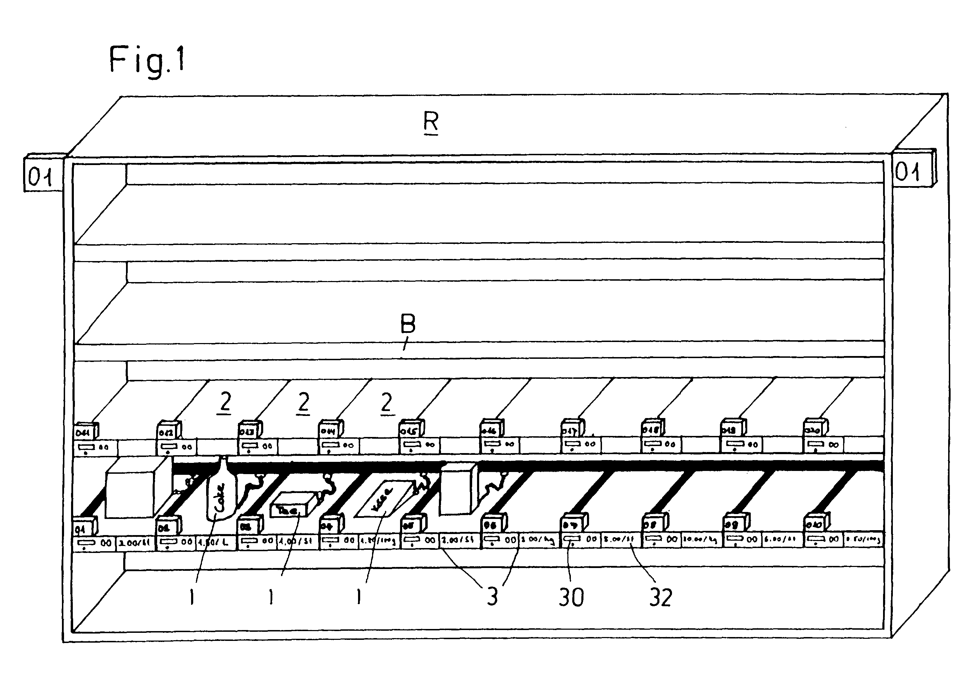

Der Kunde betritt nun die effektive Verkaufsfläche, wo sich die erfindungsgemässen Regale R befinden. Ein Ausführungsbeispiel eines derartigen Regales R ist in der Figur 1 dargestellt. Dieses Regal R ist in Regalabteile 2 unterteilt. In jedem Regalabteil 2 ist mindestens ein Anschauungsexemplar 1 einer feilgehaltenen Ware ausgestellt. Dieses Anschauungsexemplar kann vom Kunden in die Hand genommen und geprüft werden. Bei häufig gekauften Produkten können auch mehrere Anschauungs.exemplare in einem oder mehreren Abteilen ausgestellt werden. Das Anschauungsexemplar kann mit dem tatsächlich verkauften Produkt identisch sein oder lediglich einer unverderblichen Imitation entsprechen. Um Diebstähle oder mutwilliges Entfernen zu verhindern, können die einzelnen Anschauungsexemplare 1, wie in der Figur 1 dargestellt, ankettet sein.

Wünscht der Kunde eine entsprechende Ware zu erstehen, so aktiviert er einen Warenabruf. Hierfür ist im Bereich jedes Abteiles 2 eine Warenabrufeinheit 3 vorhanden, die eindeutig einer einzigen angebotenen Ware zugeordnet ist. In diesem Ausführungsbeispiel ist die Warenabrufeinheit 3 in den Regalbrettern B integriert. Die Anschauungsexemplare sind angekettet.
Diese Warenabrufeinheit 3 ist in der Figur 2 detaillierter dargestellt. Sie ist ein Datenempfänger und -übermittler. Damit der Kunde mit ihr kommunizieren kann, weist sie einen Karteneinschub 30 auf. Zudem besitzt sie einen Display 31, auf dem der aktuelle Verkaufspreis der entsprechenden Ware angezeigt wird. Der Verkaufspreis kann täglich durch eine zentrale Steuereinheit aktualisiert werden. Ebenso kann auf ihr angezeigt werden, wenn dieses Produkt im Moment nicht mehr verfügbar sein sollte.
Diese Ausführungsform weist zudem einen zweiten Display 31' auf, mittels dem der Kunde auf spezielle Angebote aufmerksam gemacht wird. Des weiteren umfasst die Warenabrufeinheit 3 manuelle Eingabeelemente 32 in Form von Tasten. Jede Warenabrufeinheit 3 ist mit einem später beschriebenen Lager L verbunden. Diese Verbindung erfolgt bevorzugterweise über die zentrale Steuereinheit. Um den Warenabruf zu aktivieren, muss der Kunde lediglich die Kundenidentifikationskarte 4 in den Karteneinschub 30 stecken. Dadurch hat er ein Exemplar der entsprechenden Ware bestellt. Die Warenabrufeinheit 3 liest nämlich den Kartencode und leitet diesen gemeinsam mit ihrem eigenen Code des Abteils, der zur Identifizierung der bestellten Ware dient und dem entsprechenden Abteil im Regal zugeordnet ist, an die zentrale Steuereinheit weiter. Wünscht der Kunde mehrere gleiche Produkte zu erstehen, so kann er die Karte im Karteneinschub steckenlassen und eine Eingabetaste solange gedrückt halten, bis die gewünschte Anzahl auf einem Display hinaufgezählt worden ist. Für versiertere Kunden besteht die Möglichkeit, mittels den Eingabetasten 32 die gewünschte Anzahl einzugeben, so dass die Karte lediglich einmal hineingesteckt werden muss. Weitere Eingabe oder Korrekturen über die Tastatur sind möglich.

Hat es sich bei dieser Bestellung um den ersten kundenspezifischen Warenabruf gehandelt, so eröffnet die zentrale Steuereinheit ein kundenspezifisches beziehungsweise kartenspezifisches File. Sämtliche weiteren Warenabrufe mit dieser Kundenidentifikationskarte werden nun in dasselbe File abgelegt. Der Kunde kann somit durch das Verkaufslokal schlendern und unbeschwert seine Bestellungen aufgeben, wobei er sich trotzdem durch die ausgestellten Waren beeinflussen lassen kann.

Sollte der Kunde den Ueberblick über seine Bestellungen verlieren, so kann er sich zu einer Informationssäule I begeben, die an zentralen Stellen im Geschäftslokal aufgestellt sind. Eine Ausführungsform einer derartigen Informationssäule I ist in der Figur 4 dargestellt. Sie ist mit der zentralen Steuereinheit mittels Datenleitungen verbunden und weist einen Bildschirm 50, eine Eingabetastatur 51, einen Karteneinschub 52 und eine Belegausgabe 53 auf. In den Karteneinschub 52 der Informationssäule I kann der Kunde nun seine Kundenidentifikationskarte 4 einschieben. Dadurch wird das spezifische Kundenfile geöffnet und die bestellten Waren erscheinen auf dem Bildschirm. Bevorzugterweise wird der Artikelname, die bestellte Stückzahl, der Verkaufspreis und der aktuelle Gesamtkaufpreis der abgerufenen Waren angezeigt. Der Kunde hat nun die Möglichkeit, über die Eingabetastatur 51 die Bestellung zu ändern, insbesondere Produkte zu entfernen, Stückzahlen zu korrigieren oder Produkte hinzuzufügen. Zudem kann er sich einen Beleg der bereits bestellten Waren ausdrucken lassen.

Der Kunde kann anschliessend mit seinem Einkauf weiterfahren oder sich zu einer hier nicht dargestellten Zahlstelle begeben, die ebenfalls mit der zentralen Steuereinheit verbunden ist. An dieser Zahlstelle gibt er seine Kundenidentifikationskarte 4 ab. Diese wird wiederum durch ein entsprechendes Datenempfangs- und Uebermittlungsgerät gelesen, so dass das entsprechende kundenspezifische File in der zentralen Steuereinheit abgerufen wird. Diese Steuereinheit übermittelt den Gesamtkaufpreis der bestellten Waren an die Zahlstelle, so dass der Kunde seinen Einkauf bezahlen kann. Die Zahlstelle übermittelt nun ihrerseits an die Steuereinheit, dass der Kunde sein Einverständnis zum Kauf gegeben hat und dass die Zahlung erfolgt ist oder unmittelbar erfolgen wird, worauf diese die Meldung an das Lager L weitergibt, so dass dieses die gekauften Waren an den wartenden Kunden ausliefert. Zudem schliesst sie das kundenspezifische File, löscht es oder kopiert es zu statischen Zwecken in einen anderen Bereich des Rechners. Wenn dieselbe Kundenidentifikationskarte wiederum in Umlauf gesetzt wird, so kann demselben Code ein neues, leeres Kundenfile zugeordnet werden.

Im folgenden wird beschrieben, wie die Zusammenstellung im Lager L erfolgt und wie ein Ausführungsbeispiel eines derartigen Lagers L aufgebaut ist.

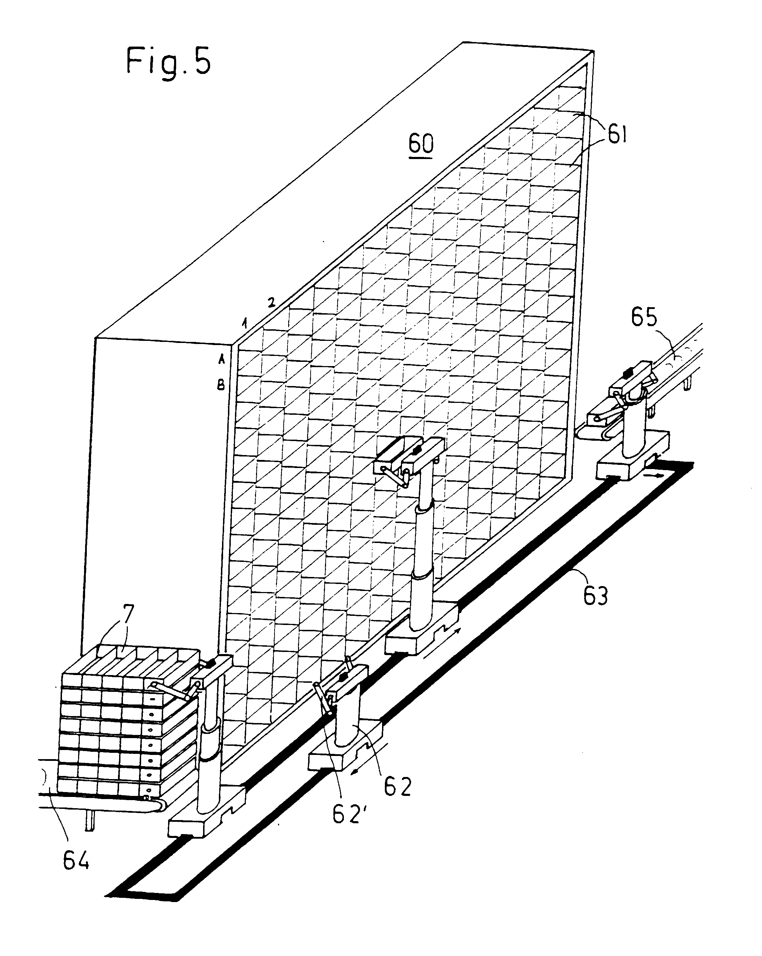

In Figur 5 ist ein Teilbereich eines derartigen Lagers dargestellt. Es umfasst mindestens ein Lagergestell 60, das in einzelne Abteile 61 unterteilt ist. Diese Abteile 61 sind ähnlich wie die Verkaufsregale R codiert und die darin gelagerten Waren eindeutig durch die zentrale Steuereinheit identifizierbar. Die Böden der Abteile 61 weisen bevorzugterweise eine leichte Neigung auf. Die Waren befinden sich hintereinander in den entsprechenden Abteilen, wobei das vorderste Produkt durch eine hier nicht dargestellte Klappe am Herausfallen gehindert wird. Auf der hinteren Seite der Abteile 61 sind automatisch betätigbare Schieber angeordnet, die in der Figur nicht sichtbar sind. Diese Abteile 61 werden von der Rückseite aufgefüllt. Dadurch sind die älteren Produkte, die frühzeitiger verkauft werden sollten, stets vorne und werden so zuerst entnommen. Das zeitintensive Aussortieren von Waren mit abgelaufenem Verkaufsdatum erübrigt sich somit oder beschränkt sich lediglich darauf, dass die zuvorderst befindlichen Waren überprüft werden müssen.

Auf dem Boden vor dem Lagergestell 60 ist entlang dessen gesamter Länge ein in sich geschlossener Schienenstrang 63 verlegt. Auf diesem Schienenstrang 63 sind selbstfahrende Selectoren 62 in Form von Robotern mit Greifarmen 62' bewegbar. Ihre Funktion wird später beschrieben. An einem Ende des Lagergestelles 60 endet ein Zubring-Förderband 64, am anderen Ende beginnt ein Abtransport-Förderband 65.

In diesem Lager werden nun die mittels dem Warenabruf bestellten Waren in Warenkörbe 7 verpackt. Diese Warenkörbe 7 sind stabil ausgestaltet und stapelbar. Bevorzugterweise weisen sie aufklappbare Haltegriffe auf, so dass sie vom Kunden anstelle von Tragtaschen nach Hause genommen werden können. Damit sie zu Hause bis zum nächsten Einkauf nicht zuviel Platz benötigen, sind sie vorzugsweise faltbar oder zusammenklappbar. Ihre Grösse ist so bemessen, dass ihr Füllvolumen etwa demjenigen einer Tragtasche entspricht. Derartige Warenkörbe sind mit einem Depot behaftet, so dass nach Hause genommene Körbe beim nächsten Einkauf wieder zurückgebracht werden. Die Warenkörbe werden in diesem Fall vor dem Betreten des effektiven Verkaufslokales auf eine hier nicht dargestellte automatische Warenkorb-Rückgabestelle gebracht, wobei der Kunde eine Gutschrift in Form eines Beleges oder einer Abbuchung auf dem bereits durch die Kundenidentifikationskarte eröffneten Kundenfiles erhält. Die so zurückgebrachten Warenkörbe werden automatisch gestapelt und gelangen von der Warenkorb-Rückgabestelle auf dem Zubringförderband 64 wiederum ins Lager.

Dort wird ein Warenkorb 7 von den Greifarmen 62' eines Selectors 62 ergriffen. Jeder Warenkorb ist mit einem maschinenlesbaren Code versehen. Dieses wird durch einen Sensor erfasst und ebenfalls dem kundenspezifischen File zugeordnet. Der Selector 62 fährt nun, gesteuert von der zentralen Steureinheit oder einer ihr untergeordneten Einheit, mit dem Warenkorb 7 zu einem bestimmten Abteil 61. Die Klappe des Abteils wird automatisch geöffnet und das vorderste Produkt fällt heraus und in den Warenkorb. Damit die Fallstrecke nicht zu gross wird, ist der Selector automatisch höhenverstellbar, so dass der Warenkorb im Bereich des betreffenden Abteiles gebracht werden kann. Die Klappe schliesst sich nun wieder und die noch im Abteil vorhandenen Waren werden durch den Schieber nach vorne geschoben. Dieses automatische Bereitstellen der kundenspezifisch gekauften Waren erfordert eine gut durchdachte, speziell auf das vorhandene Warensortiment abgestimmte Logistik, damit die Wege der Selectoren möglichst kurz sind. Ebenso dürfen sich die nacheinander in den Warenkorb fallenden Waren nicht gegenseitig beschädigen, das heisst zuerst müssen die schweren harten Waren eingepackt werden und nachher erst die empfindlichen, leicht beschädigbaren. Ebenfalls muss anhand der bestellten Warenliste erkannt werden, wieviele Warenkörbe insgesamt benötigt werden, damit diese gemeinsam abgefertigt werden können.

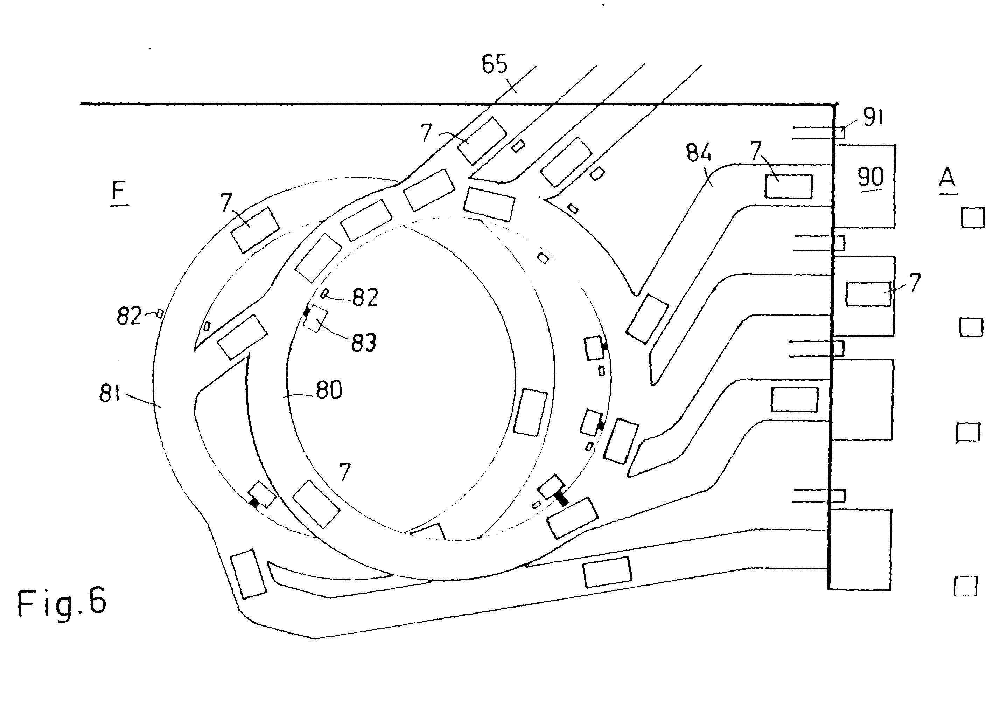

Nachdem die bestellten oder gekauften Waren zusammengestellt worden sind, übergibt der Selector 62 den Warenkorb 7 einem Abtransport-Förderband 65. Dieses Abtransport-Förderband 65 bildet den Anfang einer Förderanlage F, die den Warenkorb 7 nach erfolgter Bezahlung zu einer Ausgabestelle A transportiert, wo er vom Kunden in Empfang genommen werden kann. Die Förderanlage F, wie in Figur 6 dargestellt, besteht bevorzugterweise aus mindestens einer Hauptförderstrecke 80, die eine direkte Verbindung zwischen Lager L und Ausgabestelle A bildet. Die Hauptförderstrecke 80 ist bevorzugterweise ringförmig ausgebildet und weist mehrere tangential wegführende Ausgabebahnen 84 auf, die je zu einer Ausgabeplattform 90 der Ausgabestelle A führen. Vor jeder Abzweigung ist ein Sensor 82 angeordnet, der den ankommenden Warenkorb identifiziert. Zudem sind Weichen 83 vorhanden, die den entspechenden Warenkorb eine entsprechenden Ausgabeplattform 90 zuleiten können. Oberhalb jeder Ausgabe-plattform it eine Ausgabe-Anzeigetafel 91 vorhanden, auf der der angelieferte Warenkorb angekündigt wird. Auch dieses Anzeigetafel wird von der zentralen Steuereinheit bedient. Mittels den Sensoren 82 lässt sich feststellen, ob dieser Warenkorb 7 von der Ausgabe-Plattform 90 entfernt worden ist, so dass der nächste geliefert werden kann.

Eine weitere Förderband-Schlaufe, die von der Hauptförderstrecke 80 abzweigt, ist die Warteschlaufe 81. Soll der Warenkorb nicht direkt geliefert werden, so kann er in diese Warteschlaufe gebracht werden, wo er solange kreist, bis er durch den Kunden an einer speziellen Ausgabestelle A' abgerufen wird. Auch entlang dieser Warteschlaufe sind Sensoren 82 und Weichen 83 angeordnet. Der Abruf erfolgt mittels der Kundenidentifikationskarte. Falls es sich nicht um eine persönliche Karte handelt, wird diese mit diesem letzten Abruf eingezogen, so dass sie als neue Karte für den nächsten Kunden wiederverwendet werden kann.

Anhand dieses Ausführungsbeispieles wurde einerseits das erfindungsgemässe Verfahren erläutert. Andererseits wird es dem Leser klar, dass die verschiedensten Variationen des Verkaufssystems und Warenabrufverfahrens möglich sind, die auf demselben Prinzip beruhen, nämlich einer eindeutigen Identifikation der Ware mit dem Kunden und der direkten Kopplung jeder Bestellung mit dem Kundencode.

Mögliche Varianten sind beispielsweise:
Anstelle der oben beschriebenen Kundenidentifikationskarte können auch andere mit kundenspezifischen Codes versehene Datenträger, die beispielsweise Magnetstreifen aufweisen und Kreditkarten nachempfunden sind, eingesetzt werden. Ebenso kann ein Code von Hand in die Warenabrufeinheit eingetippt werden. Auch können regelmässige Kunden persönliche Karten besitzen, so dass sie nicht jedes Mal eine der Kartensäule entnehmen müssen.

Die zentrale Steuereinheit kann noch weitere Funktionen übernehmen. Sie ist sicherlich mit der Lagerverwaltung gekoppelt. Zugleich kann sie auch noch weitere Anzeigetafeln steuern, die innerhalb oder vor dem Verkaufslokal angebracht sind und auf spezielle Angebote aufmerksam machen.

Das Lager muss nicht zwingend vollautomatisiert sein. Kleinere Betriebe können auch Lagerarbeiter einsetzen, die die bestellten Waren manuell zusammenstellen. Ebenso kann die Warenausgabe persönlich erfolgen.

Anstelle eines Warenkorbes kann der Kunde auch eine Einkaufstasche oder Einkaufstüte verlangen. Die Auslieferung der Waren erfolgt dann zwar immer noch im Warenkorb, in diesem befindet sich jedoch ein oder mehrere Einkaufstaschen, in die die Waren bereits verpackt sind.

Das erfindungsgemässe Einkaufszentrum kann mit dem konventionellen System gekoppelt werden. Das konventionelle System empfiehlt sich vorallem für schnell verderbliche Waren, wie Früchte, Gemüse und Molkereiprodukte. Diese könnten nach wie vor entweder in Selbstbedienung oder im direkten Verkauf in einer Abteilung des Verkaufslokales erstanden werden und würden direkt vom Kunden zur Zahlstelle gebracht werden.

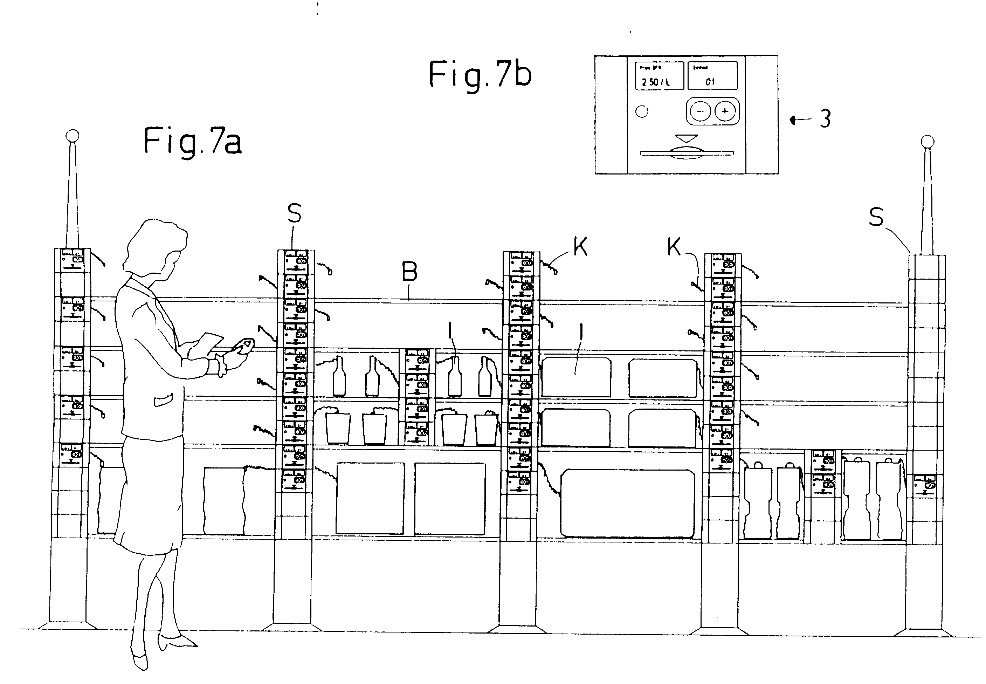

In Figur 7 ist eine weitere Ausführungsform des Verkaufsregals mit Warenabrufeinheiten 3 dargestellt. Die sind in den tragenden Säulen S der Regale R integriert. Dieser Aufbau erleichert einerseits die Verlegung der Daten- und Stromkabel, die innerhalb der Säulen S geführt sind. Zudem wird die Flexibilität der Regale erhöht. Sie bestehen nun aus einzelnen Elementen. Die Länge der einzelnen Regalbretter B kann somit je nach Bedarf gewählt werden. Die einzelnen Anschauungsexemplare 1 sind wiederum angekettet, wobei die Ketten K an den Säulen S befestigt sind. Dabei bilden die Ketten K eine Verbindung zwischen den Anschauungsexemplaren 1 und den Warenabrufeinheiten 3, so dass die Zuordnung erleichtert ist.

## Patentansprüche

1. Verfahren zum automatischen Warenabruf in einem Verkaufslokal,
wobei jede Ware eindeutig einer elektronischen Warenabrufeinheit (3) zugeordnet wird,
wobei der Warenabruf durch Bedienung der Warenabrufeinheit (3) erfolgt,
wobei der Warenabruf einem Kundenidentifikationscode zugeordnet wird und kundenidentifikationscode-spezifisch registriert und in ein Lager (L) weitergeleitet wird,
wobei im Lager (L) die bestellten Waren kundenidentifikationscode-spezifisch zusammengestellt und mittels einer Förderanlage an eine Ausgabestelle (A) transportiert werden, wobei der Transfer und die Verwaltung aller Daten über eine zentrale Steuereinheit erfolgt,
wobei im Verkaufslokal mindestens je ein Anschauungsexemplar (1) der Waren für den Kunden in seiner Hand prüfbar in Regalen (R) ausgestellt werden,
wobei die Warenabrufeinheit (3) mittels einer in ihr einschiebbare, den Kundenidentifikationscode enthaltenden Kundenidentifikationskarte (4) aktiviert wird,
dadurch gekennzeichnet, dass
die kundenidentifikationscode-spezifisch zusammengestellten Waren im Lager (L) in mindestens einen Warenkorb gelegt und auf die Förderanlage gelegt werden, wobei der mindestens eine Warenkorb auf Warteschlaufen der Förderanlage kreist, wobei der Warenkorb vor Abzweigungen mittels Sensoren identifiziert wird, bis er mittels der Kundenidentifikationskarte an der Ausgabestelle abgerufen wird, worauf er mittels mindestens einer Weiche an eine Ausgabeplattform der Ausgabestelle zugeleitet wird.

2. Verfahren nach Anspruch 1, dadurch gekennzeichnet, dass die kundenidentifikationscode-spezifisch erfassten Warenabrufe und mindestens deren aufsummierte Kaufpreise an eine Zahlstelle übermittelt werden, von wo ein kundenidentifikationscode-spezifisches Signal ins Lager (L) übermittelt wird, worauf die zusammengestellten Waren an die Ausgabestelle (A) transportiert werden.

3. Verfahren nach Anspruch 1, dadurch gekennzeichnet, dass für jedes Anschauungsexemplar (1) auf einem Display (31) der Warenabrufeinheit (3) die Daten betreffend dessen Vorhandensein im Lager (L) und dessen aktueller Verkaufspreis aktualisiert werden.

4. Selbstbedienungs-Einkaufszentrum zur Durchführung des Verfahrens nach Anspruch 1, mit einer Verkaufsfläche mit Regalen (R), einem Lager (L) für die Waren, einer Zahlstelle und mit in den Regalen (R) integrierten elektronischen Warenabrufeinheiten (3) zum automatischen, kundenidentifikationscode-spezifischen Abruf der Waren aus dem Lager (L),
wobei jede Warenabrufeinheit (3) eindeutig einer einzigen Ware zugeordnet ist,
wobei jede Warenabrufeinheit (3) einen Karteneinschub (30) aufweist, in die eine Kundenidentifikations-Karte (4) steckbar ist,
wobei die Warenabrufeinheiten (3) über eine zentrale Steuereinheit mit einem Lager (L) verbunden sind und die zentrale Steuereinheit mit mindestens einer Zahlstelle verbunden ist, die dadurch mit dem Lager (L) datentransfermässig verbunden ist, und wobei das Lager (L) mit einer Ausgabestelle (A) mittels einer Förderbandanlage (F) für den Transport von Warenkörben verbunden ist und
wobei in den Regalen (R) mindestens je ein Anschauungsexemplar (1) der Waren für den Kunden in seiner Hand prüfbar ausgestellt ist,
dadurch gekennzeichnet,
dass die Förderbandanlage eine Hauptförderstrecke (80) aufweist, welche über Ausgabebahnen (84) mit Ausgabeplattformen (90) der Ausgabestelle (A) verbunden ist, dass an jeder Abzweigung der Hauptförderstrecke (80) ein Sensor (82) angeordnet ist zur Identifikation der Warenkörbe und
dass Weichen (83) vorhanden sind für die Zuleitung der Warenkörbe an die Ausgabeplattformen (90).

5. Einkaufszentrum nach Anspruch 4 dadurch gekennzeichnet, dass die Warenabrufeinheit in tragenden Säulen (S) der Regale (R) integriert sind.

6. Einkaufszentrum nach Anspruch 4, dadurch gekennzeichnet, dass die Warenabrufeinheit in den Regalbrettern (B) integriert sind.

7. Einkaufszentrum nach Anspruch 4, dadurch gekennzeichnet, dass jede Warenabrufeinheit (3) einen Display (31) aufweist.

8. Einkaufszentrum nach Anspruch 4, dadurch gekennzeichnet, dass von der Hauptförderstrecke (80) eine Förderband-Schlaufe in Form einer Warteschlaufe (81) abzweigt.

## Claims

1. Method for automatically ordering goods in a sales facility, wherein each good is clearly associated with an electronic goods-ordering unit (3), the goods are ordered by operating the goods-ordering unit (3), the goods order is associated with a customer-identification code and is recorded in a manner specific to the customer-identification code and is forwarded to a store (L), the goods, for which an order has been placed, are grouped together in the store (L) in a manner specific to the customer-identification code and are transported to a distribution point (A) by means of a conveyor system, the transfer and the management of all the data are effected by way of a central control unit, at least one viewing sample (1) of each of the goods is displayed in the sales facility on stands (R) in such a way that the customer can examine the sample in his hands, the goods-ordering unit (3) is activated by means of a customer-identification card (4) which can be inserted into it and contains the customer-identification code,
characterised in that the goods in the store (L) that have been grouped together in a manner specific to the customer identification code are placed in at least one goods basket and are placed on the conveyor system, with the at least one goods basket moving in a circle in waiting loops of the conveyor system and with the goods basket being identified ahead of junctions by means of sensors until the delivery thereof is requested by means of the customer identification card at the distribution point, whereupon the goods basket is directed to a distribution platform of the distribution point by means of at least one points system.

2. Method according to claim 1, characterised in that the goods orders, which are acquired in a manner specific to the customer-identification code, and at least the totalled purchase prices thereof are transmitted to a payment point, from which a signal specific to the customer-identification code is transmitted to the store (L), whereupon the goods which have been grouped together are transported to the distribution point (A).

3. Method according to claim 1, characterised in that for each viewing sample (1) the data relating to the availability thereof in the store (L) and the current purchase price thereof are updated on a display (31) of the goods-ordering unit (3).

4. Self-service shopping centre for carrying out the method according to claim 1, having a sales area with stands (R), a store (L) for the goods, a payment point and electronic goods-ordering units (3), which are integrated in the stands (R) for the purpose of automatically ordering the goods from the store (L) in a manner specific to the customer-identification code, in which each goods-ordering unit (3) is clearly associated with one single good, each goods-ordering unit (3) has a card entry point (30) into which a customer-identification card (4) can be inserted, the goods-ordering units (3) are connected to a store (L) by way of a central control unit and the central control unit is connected to at least one payment point, which is thereby connected to the store (L) in terms of data transfer, and the store (L) is connected to a distribution point (A) by means of a conveyor belt system (F) for the transportation of goods baskets and at least one viewing sample (1) of each of the goods is displayed on the stands (R) in such a way that the customer can examine the sample in his hands,
characterised in that the conveyor belt system has a main conveyor section (80) which is connected to distribution platforms (90) of the distribution point (A) by way of distribution tracks (84), in that arranged at each junction of the main conveyor section (80) there is a sensor (82) for the purpose of identifying the goods baskets and in that points (83) are provided for directing the goods baskets to the distribution platforms (90).

5. Shopping centre according to claim 4,
characterised in that the goods-ordering units are integrated in supporting columns (S) of the stands (R).

6. Shopping centre according to claim 4,
characterised in that the goods-ordering units are integrated in the shelves (B) of the stands.

7. Shopping centre according to claim 4,
characterised in that each goods-ordering unit (3) has a display (31).

8. Shopping centre according to claim 4,
characterised in that a conveyor belt loop branches off from the main conveyor section (80) in the form of a waiting loop (81).

## Revendications

1. Procédé de commande automatique de marchandises dans des locaux de vente, chaque marchandise étant affectée distinctement à une unité de commande de marchandises (3) électronique, la commande de marchandises s'effectuant par la manipulation de l'unité de commande de marchandises, la commande de marchandises étant affectée à un code d'identification client et enregistrée de façon spécifique au code d'identification client et transmise dans un magasin (L), les marchandises commandées dans le magasin (L) étant regroupées de façon spécifique au code d'identification client et transportées à un poste de sortie (A) au moyen d'une installation de transport, la transmission et la gestion de toutes les données s'effectuant par l'intermédiaire d'une unité de commande centrale, au moins un échantillon (1) de chaque marchandise, que le client peut examiner en le prenant en main, étant exposé sur des étagères (R) dans le local de vente, l'unité de commande de marchandises (3) étant activée au moyen d'une carte d'identification client (4) insérable dans l'unité de commande et contenant le code d'identification client, **caractérisé en ce que** les marchandises regroupées dans le magasin (L) selon le code d'identification client sont placées dans au moins un panier à marchandises et posées sur l'installation de transport, au moins un panier à marchandises circulant sur des boucles d'attente de l'installation de transport, le panier à marchandises étant identifié au moyen de capteurs en amont de bifurcations, jusqu'à ce qu'il soit appelé au moyen de la carte d'identification client au poste de sortie où il est amené à une plate-forme de sortie du poste de sortie au moyen d'au moins un aiguillage.

2. Procédé selon la revendication 1, **caractérisé en ce que** les commandes de marchandises enregistrées selon le code d'identification client et au moins leurs prix additionnés sont transmis à un poste de péage, d'où un signal spécifique au code d'identification client est transmis au magasin (L), sur quoi les marchandises regroupées sont transportées au poste de sortie (A)

3. Procédé selon la revendication 1, **caractérisé en ce que** pour chaque échantillon de marchandise (1), les données relatives à leur disponibilité au magasin (L) et leur prix de vente actuel sont actualisés sur un écran (31) de l'unité de commande (3).

4. Centre commercial en libre-service pour la réalisation du procédé selon la revendication 1, avec une surface de vente avec des étagères (R), un magasin (L) pour les marchandises, un poste de péage et avec des unités de commande de marchandises (3) électroniques intégrées dans les étagères (R) pour la commande automatique des marchandises selon le code d'identification client hors du magasin (L), chaque unité de commande de marchandises (3) étant affectée clairement et uniquement à une seule marchandise, chaque unité de commande de marchandises (3) présentant un dispositif d'insertion de carte (30) dans lequel une carte d'identification client (4) est insérable, les unités de commande de marchandises (3) étant connectées à un magasin (L) par l'intermédiaire d'une unité de commande centrale et l'unité de commande centrale étant raccordée à au moins un poste de péage dont les données sont ainsi transmises au magasin (L), et le magasin (L) étant raccordé à un poste de sortie (A) au moyen d'une bande transporteuse (F) pour le transport de paniers de marchandises et au moins un échantillon de marchandises (1), que le client peut examiner en le prenant en main, étant exposé sur les étagères (R), **caractérisé en ce que** la bande transporteuse présente une trajectoire de transport principale (80) raccordée aux plates-formes de sortie (90) des postes de sortie (A) à l'aide de voies de sortie (84), qu'un capteur (82) est placé à chaque bifurcation de la trajectoire de transport principale (80) pour l'identification des paniers de marchandises, et que des aiguillages (83) sont disponibles pour amener les paniers de marchandises aux plates-formes de sortie (90).

5. Centre commercial selon la revendication 4, **caractérisé en ce que** les unités de commande de marchandises sont intégrées dans des colonnes-supports (S) des étagères (R).

6. Centre commercial selon la revendication 4, **caractérisé en ce que** les unités de commande de marchandises sont intégrées dans des rayons d'étagères (B).

7. Centre commercial selon la revendication 4, **caractérisé en ce que** chaque unité de commande de marchandises (3) présente un écran (31).

8. Centre commercial selon la revendication 4, **caractérisé en ce qu'une** déviation de la bande transporteuse en forme de boucle d'attente (81) bifurque de la trajectoire de transport principale (80).
